# EUROPEAN PATENT SPECIFICATION

(11) **EP 3 620 313 B1**
(45) Date of publication and mention of the grant of the patent: **28.07.2021**
(21) Application number: 18795265.0
(22) Date of filing: 12.04.2018
(51) Int. Cl.: B60C 19/00, B60C 23/04

(54) **FITTING STRUCTURE BETWEEN FUNCTIONAL COMPONENT ACCOMODATION CASE AND RUBBER BASE**
MONTAGESTRUKTUR ZWISCHEN AUFNAHMEGEHÄUSE FÜR FUNKTIONELLE KOMPONENTE UND GUMMIBASIS
STRUCTURE DE MONTAGE ENTRE UN BOÎTIER DE RÉCEPTION DE COMPOSANT FONCTIONNEL ET BASE EN CAOUTCHOUC

(30) Priority: 02.05.2017 JP 2017091839
(43) Date of publication of application: 11.03.2020
(73) Proprietor: Bridgestone Corporation, Tokyo 104-8340 (JP)
(72) Inventor: ISHII, Keita, Tokyo 104-8340 (JP); WAKAO, Yasumichi, Tokyo 104-8340 (JP); KAWAMATA, Satoru, Tokyo 104-8340 (JP)
(74) Representative: Oxley, Robin John George
(86) International application number: PCT/JP2018/015450
(87) International publication number: WO 2018/203467

(56) References cited:
- WO-A1-2004/005054
- WO-A1-2010/043264
- WO-A1-2015/019288
- WO-A1-2015/019288
- WO-A1-2017/150396
- JP-A- 2008 230 411
- JP-A- 2013 226 853
- JP-A- 2015 160 512
- JP-A- 2017 088 171

## Description

### TECHNICAL FIELD

The present invention relates a fitting structure between a functional component accommodation case for accommodating a functional component such as a sensor module for detecting a state of a tire and a rubber base for mounting, to the tire, the functional component accommodated in the accommodation case.

### BACKGROUND

Conventionally, there has been known a technology in which a case having accommodated therein a functional component such as a sensor module having integrated therein a sensor such as a pressure sensor, a temperature sensor, an acceleration sensor and the like, a battery or a power generation element and a wireless device, is mounted via a rubber base on an inner surface of a tire to detect a status of the running tire such as an inner pressure of the tire, and transmit detected sensor information to a vehicle side (for example, Patent Document 1).

In Patent Document 1, as illustrated in FIG. 7, there is provided a partition convex part 54 that partitions a circular concave part 53 formed on a bottom part 52 of a functional component accommodation case 51 into two semicircular concave parts 53a and 53b, and a partition concave part 57 that partitions a circular convex part 56 provided on an inner surface side of a tire 40, which is a part to which a rubber base 55 is attached. When the functional component accommodation case 51 is mounted to the rubber base 55, the partition convex part 54 and the partition concave part 57 are fitted together. Whereby, inertia force applied to the functional component accommodation case 51 at the time of step-in and at the time of kick-out of the tire is dispersed to the rubber base 55 and supported, and distortion caused by impact force applied to the rubber base 55 when the tire passes through a protrusion or the like is mitigated by elastic deformation of the rubber base 55. Accordingly, it is possible to ensure high-speed durability of the functional component accommodated in the functional component accommodation case 51 and the rubber base 55.

### CITATION LISTT

### Patent Document

Patent Document 1: Japanese Unexamined Patent Application Publication No. 2015-160512. Attention is also drawn to the disclosures of WO2015/019288, JP2008/230411 and WO2010/043264.

### SUMMARY OF THE INVENTION

### Technical Problem

However, in Patent Document 1, because the partition concave part 57 is a groove provided in the rubber circular convex part 56, in order to prevent vibration or rotation of the functional component accommodation case 51 so as to suppress the frictional heat generation, not only a groove depth of about one (1) mm to two (2) mm is required, but it is also necessary to secure the volume of two semicircular convex parts 56a and 56b partitioned by the partition concave part 57. For this reason, it is necessary to increase the volume of the circular convex part 56, however, if the volume of the circular convex part 56 is increased, the weight of the rubber base 55 is increased, and as a result, the uniformity of the tire when the functional component is mounted may be deteriorated.

The present invention has been made in view of the conventional problem and aims at providing a fitting structure between the functional component accommodation case and the rubber base that can reliably prevent vibration and rotation of the functional component accommodation case even though a depth or a height of the concave/convex part formed on the rubber base is small.

### Solution to Problem

According to an aspect of the present invention, there is provided a fitting structure as claimed in claim 1.

### BRIEF DESCRIPTION OF THE DRAWINGS

FIG. 1 is a view illustrating an exemplary embodiment of the present invention;
FIG. 2 is a view illustrating an internal structure of a rubber base;
FIGs. 3A to 3C are views each illustrating a functional component accommodation case, in which FIG 3A is a top view, FIG 3B is a front view and FIG 3C is a bottom view;
FIGs. 4A and 4B are views each illustrating the rubber base, in which FIG. 4 is a vertical sectional view and FIG. 4B is a plan view;
FIGs. 5A and 5B are views each illustrating another example of case-side convex and concave parts;
FIG. 6A and 6B are views each illustrating another example of case-side convex and concave parts; and

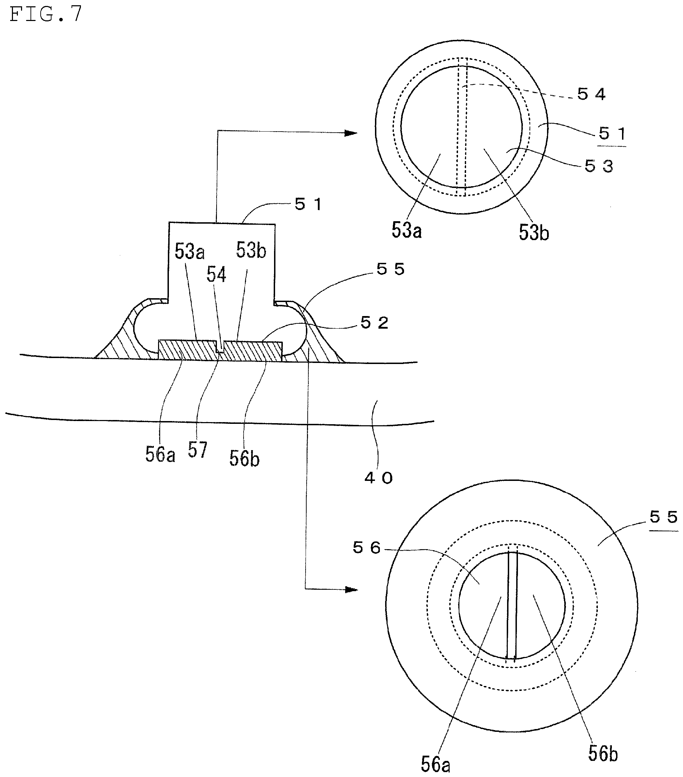

FIG. 7 is a view illustrating a conventional fitting structure between a functional component accommodation case and a rubber base.

### DESCRIPTION OF EMBODIMENT

Hereinafter, an exemplary embodiment of the present invention will be described with reference to the drawings.

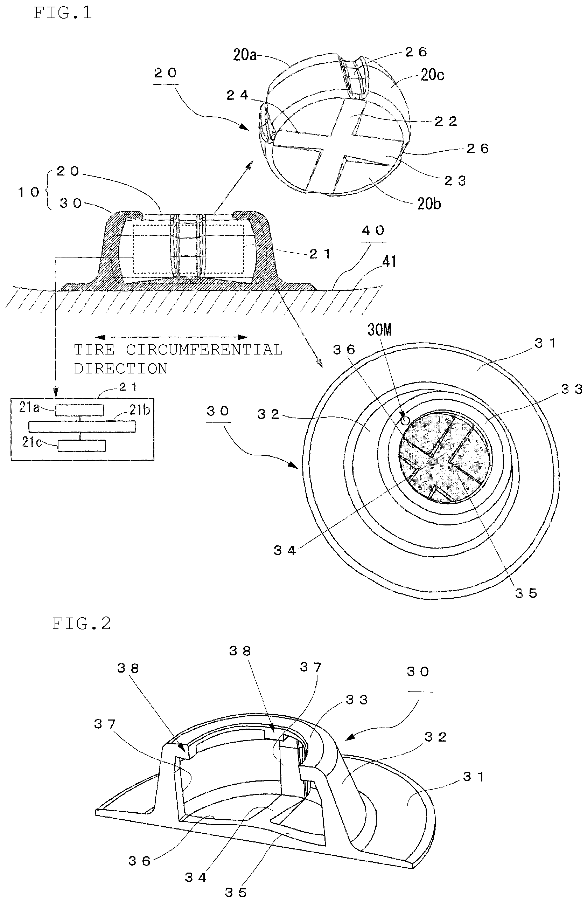

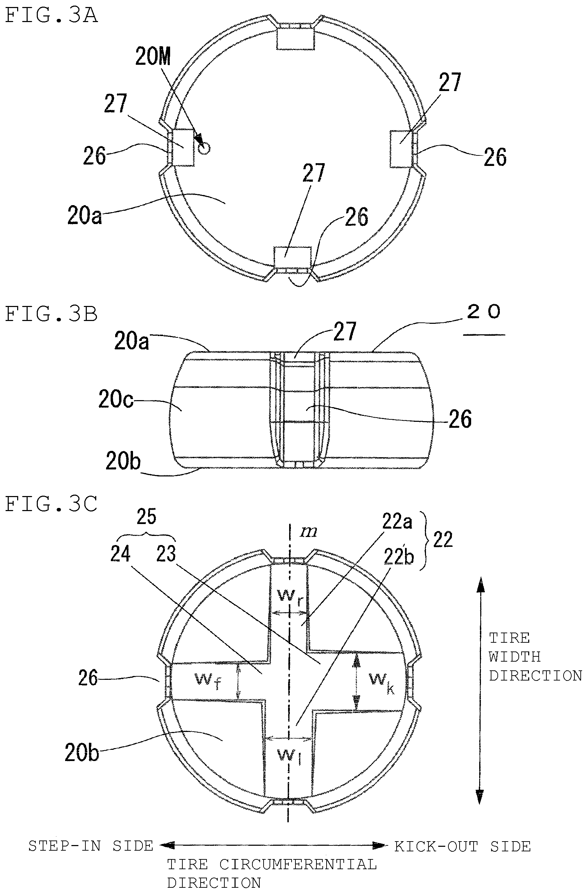

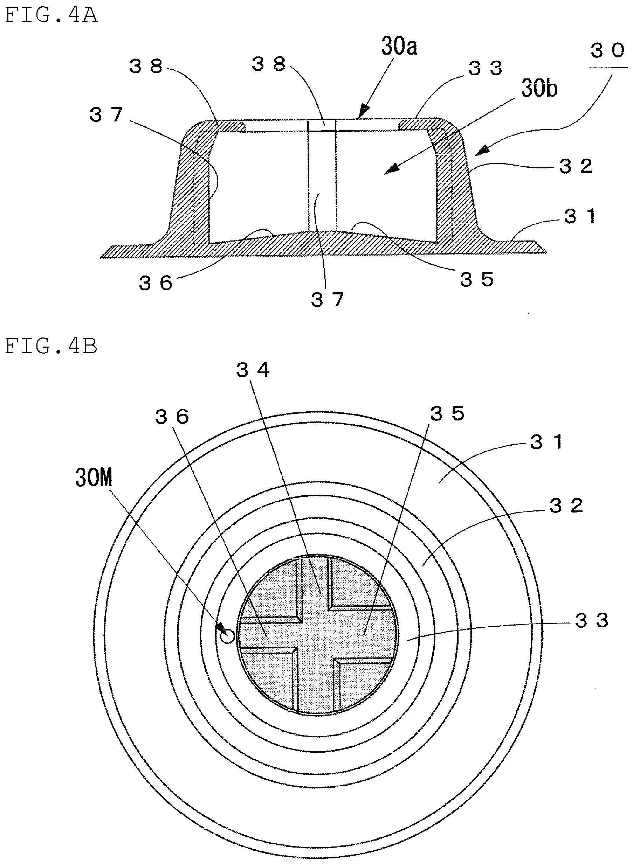

FIG. 1 is a view illustrating a functional component 10 with a rubber base according to an exemplary embodiment of the present invention, and a fitting structure between a functional component accommodation case 20 constituting the functional component with the rubber base and a rubber base 30, FIG. 2 is a view illustrating an internal structure of the rubber base 30, FIGs. 3A to 3C are views each illustrating the functional component accommodation case 20, in which FIG. 3A is a top view, FIG. 3B is a front view and FIG. 3C is a bottom view, and FIGs. 4A and 4B are views each illustrating the rubber base 30, in which FIG. 4A is a vertical sectional view and FIG. 4B is a plan view.

As illustrated in FIG. 1, a sensor module 21 as a functional component is accommodated inside of the functional component accommodation case 20. The sensor module 21 includes, as integrated parts, an acceleration sensor 21a for measuring pressure, temperature, vibration and the like inside of the tire, a power generation element 21b, a wireless device 21c for transmitting data detected by the acceleration sensor 21a, and so on.

The functional component accommodation case 20 mounted to the rubber base 30 is attached with the use of an adhesion agent or the like to an inner liner part 41, which is an inner surface side of a tire 40, in such a manner that a detection direction of the acceleration sensor 21a aligns with a tire circumferential direction.

Hereinafter, a side opposite a tire 40 side of the functional component 10 with the rubber base is defined as an upper side, which is an upper direction in FIG. 1, the tire side is defined as a lower side, the tire circumferential direction, which is a right-left direction in FIG. 1, is defined as a front-rear direction, and a tire width direction, which is a direction perpendicular to the paper face in FIG. 1, is defined as a right-left direction. In the present example, the let side in FIG. 1 is defined as a step-in side and the right side n FIG. 1 is defined as a kick-out side.

The functional component accommodation case 20 is, as illustrated in FIGs. 3A to 3C, a barrel-shaped member whose diameter of a center part is larger than diameters of an upper surface 20a and a bottom surface 20b. On the bottom surface 20b, there are formed a first groove 22 as a first case-side convex/concave part extending in the tire width direction and passing through the center of the bottom surface 20b, a second groove 23 as a second case-side convex/concave part extending in the tire circumferential direction and terminated at the first groove 22, and a third groove 24 as a third case-side convex/concave part extending in the tire circumferential direction form the end part of the step-in side and terminates at the first groove 22. Furthermore, as also illustrated in FIG. 1, end surfaces of the first to third grooves 22 to 24 are chamfered so as not to damage the rubber base 30.

As illustrated by the alternate long and short dash line in FIG. 3C, a center line m of the first groove 22 is a straight line passing through the center of the bottom surface of the functional component accommodation case 20 and inclining at a predetermined angle (90°) with respect to the tire circumferential direction. Both of the second and third grooves 23 and 24 are located on a straight line passing through the center of the bottom surface 20b and extending in the direction (tire circumferential direction) perpendicular to the center line m. Namely, the second and third grooves 23 and 24 form, together with the first groove 22, a cross groove 25 that constitutes a cruciform shape.

Further, in the present example, a groove width Wk of the second groove 23 located on the kick-out side of the first groove 22 is formed to be wider than a groove width Wf of the third groove 24 located on the step-in side of the first groove 22, so that the case-side convex/concave parts are made asymmetrical with respect to the center line m.

The first groove 22 is sectioned into a right groove 22a and a left groove 22b by the second and third grooves 23 and 24, however, a groove width Wr of the right groove 22a and a groove width Wl of the left groove 22b may be different from each other or may be the same to each other.

On the other hand, as illustrated in FIG. 1 and FIGs. 4A and 4B, the rubber base 30 is a member made of rubber having an opening part 30a which serves as an inlet and outlet for inserting and removing the functional component accommodation case 20, and a cylindrical accommodation concave part 30b for accommodating the functional component accommodation case 20. The rubber base 30 has a disc-shaped bottom part (base bottom part 31) to be fixed to the inner liner part 41 which is the inner surface of the tire 40, a side wall part 32 that is formed to rise up from the base bottom part 31 and an annular lid part 33 whose one end is connected to the side wall part 32 so as to configure the opening part 30a. The base bottom part 31 has, on the inner side thereof which is the functional component accommodation case 20 side, first to third convex parts 34 to 36 that are fitted to the first to third grooves 22 to 24, respectively.

As described above, the case-side concave part formed on the bottom surface 20b of the functional component accommodation case 20 is configured by the first groove 22 and the cross groove 25 that intersect perpendicularly to each other, the first to third convex parts 34 to 36 are formed, on the base bottom part 31, that fit with the first groove 22 and the second and third grooves 23 and 24 constituting the cross groove 25, respectively. When the functional component accommodation case 20 is attached to the rubber base 30, the first to third grooves 22 to 24 and the first to third convex parts 34 to 36 are fitted together, hence the force applied to the functional component accommodation case at the time of step-in or at the time of kick-out can be dispersed. Therefore, even though the height of the first to third convex parts 34 to 36, which are the base-side convex parts, is small, it is possible to efficiently suppress vibration, rotation and friction heat generation occurring in the functional component accommodation case.

Further, because the groove width Wk of the second groove 23 is made wider than the groove width Wf of the third groove 24 so as to make the first to third grooves 22 to 24, which are the case-side convex/concave parts, to be asymmetrical with respect to the center line m of the second groove 22, it is possible to prevent from becoming unable to recognize the directionality when fitting the functional component accommodation case 20 into the rubber base 30.

Incidentally, as illustrated in FIGs. 1 and 2, since the first to third convex parts 34 to 36 formed on the rubber base 30 are located at the bottom of the accommodation concave part 30b, the whole shape of the first to third convex parts 34 to 36 is difficult to see from the lid part 33 side. Accordingly, it is desirable to provide a positioning mark 30M on the upper surface of the lid part 33. The positioning mark 30M may be a circle as illustrated in FIG. 1, or may be a star, a triangle, or an arrow.

Further, in this example, as illustrated in FIG. 1, the depth of the first and second grooves 22 and 23, which are the case-side convex/concave parts, is made larger on the center part side and made smaller on the peripheral edge side of the functional component accommodation case, and as illustrated in FIG. 2, the height of the first and second convex parts 34 and 35, which are base-side convex/concave parts, is made larger on the center part side and made smaller on the peripheral edge side.

As such, if the groove depth of the ends of the first and second grooves 22 and 23 is made shallow, deformation of the grooves at the time of step-in and the at the time of kick-out can be suppressed and, in the center part, the functional component accommodation case 20 can be held thoroughly by the base 30. Thus, vibration and rotation of the functional component accommodation case 20 can be further reduced.

Further, the case-side convex/concave part is made groove and the base-side convex/concave part is made convex, the thickness of the base bottom part 31 can be thicker at the center part side and can be thinner at the peripheral edge side. Whereby, the recess, which occurs when the base 30 is attached on the tire inner surface, in the center part of the rubber base 30 can be made small and the holding power for holding the functional component accommodation case 20 can be increased, and the vibration and rotation of the functional component accommodation case can be further reduced.

Further, in this example, as illustrated in FIG. 1 to FIGs 4A and 4B, side grooves 26 are formed on the side surface 20c of the functional component accommodation case 20, upper surface grooves 27 are formed on the case upper surface 20a, internal convex parts 37, which fit into the side grooves 26, are formed on the inner surface side of the base bottom part 31, and lid-side convex parts 38, which fit into the upper surface grooves 27, are formed on the lid 33. With this configuration, the holding power for holding the functional component accommodation case 20 by the rubber base 30 can be further increased; hence the vibration and rotation of the functional component accommodation case can be further reduced.

In this example, the side grooves 26 have a certain depth and formed, along the shape of the side wall 20c, at four places in total, that is, two on the both ends of the side surface 20c in the circumferential direction and two on the both ends of the side surface 20c in the width direction of the functional component accommodation case 20, and the end surfaces of the side surface grooves 26 are chamfered so as not to damage the rubber base 30.

On the other hand, the internal convex parts 37 are rod-shaped members which protrude to the center of the accommodation concave part 30b from the both ends in the circumferential direction and from the both ends in the width direction of the rubber base 30 on the inner surface side of the side wall part 32, extend in the direction from the base bottom part 31 toward the lid part 33, and each of the internal convex parts 37 are fitted into the side surface grooves 26.

Further, the upper surface grooves 27 of the this example are plane rectangular shape grooves formed on the upper surface 20a side of the side surface grooves 26 and communicate with the side surface grooves 26, and lid-side convex parts 38 are block-shaped convexes formed on the lid part 33 side of the inner convex parts 37 of the rubber base 30 and project from the lid part 33 toward the center of the accommodation concave part 30b. The rectangular shape grooves and the block-shaped convexes are fitted together.

The present invention has been explained using the exemplary embodiment, however, the present invention is limited as claimed.

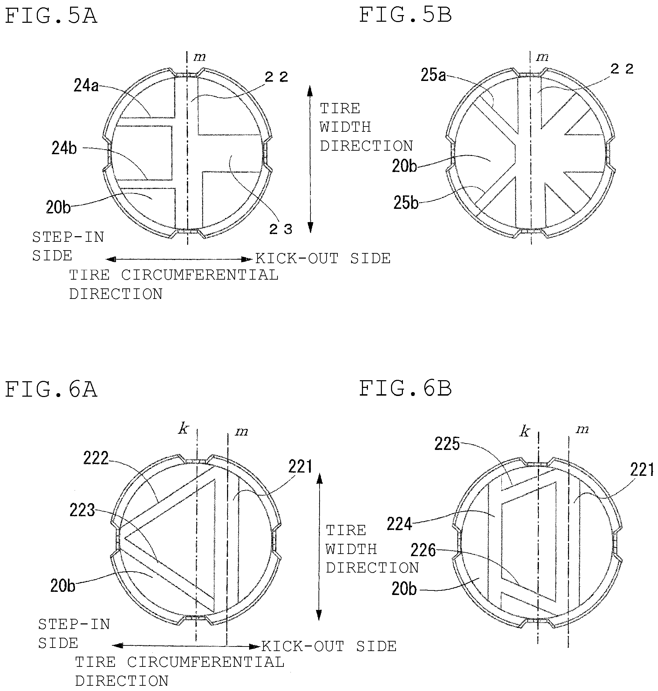

For example, in the exemplary embodiment described above, the second groove 23 and the third groove 24 form, together with the first groove 9048742-1 22, the cross groove 25 constituting a cruciform groove. However, as illustrated in FIG. 5A, two of the third grooves may be formed, and the position of the end of the second groove 23 and the positions of the ends of the third grooves 24a and 24b may be shifted in the tire width direction.

Alternatively, as illustrated in FIG. 5B, two of cross grooves 25a and 25b intersecting the first groove 22 may be formed, and the width of the cross grooves 25a and 25b on the kick-out side may be made wider than the width of the cross grooves 25a and 25b on the step-in side.

Further, in the exemplary embodiment described above, the center line m of the first groove 22 is a straight line passing though the center of the bottom surface 20b of the functional component accommodation case 20 and inclining at the predetermined angle (90°) with respect to the tire circumferential direction (hereinafter, referred to as symmetry line). However, as illustrated in FIG. 6A, the case-side convex/concave part may be formed into a triangle shape composed of a fourth groove 221 that is formed by shifting the first groove 22 toward the kick-out side and fifth and sixth grooves 222 and 223 that intersect the fourth groove 221, or may be formed into a trapezoidal shape having the fourth groove 221 and a seventh groove 224 parallel to the fourth groove 221 as bases and a eighth and ninth grooves 225 and 226 as legs. As long as the directionality is recognizable, the symmetrical line k and the center line m of the groove (the first groove 22 or the fourth groove) perpendicular to the tire circumferential direction may not necessarily coincide with each other.

In short, as long as the number, length, width, shape and so on are made asymmetrical with respect to the symmetry line k, when the functional component accommodation case 20 is fitted into the rubber base 30, it is possible to prevent misrecognition of the fitting direction. In addition, it is desirable to provide the convex/concave parts as may numbers as possible, in order to perform the rotation control by the convex/concave end part.

Further, in the above exemplary embodiment, the first to third grooves (concave parts) 22 to 24 are provided in the functional component accommodation case 20, and the first to third convex parts 34 to 36 are provided in the rubber base 30. However, the functional component accommodation case 20 side may be the convex part, and the rubber base 30 side may be concave part.

The present invention may be described as follows. Namely, according to an aspect of the present invention, there is provided a fitting structure between a functional component accommodation case and a rubber base, the functional component accommodation case being configured to accommodate a functional component that detects a state of a tire, and the rubber base being configured to be attached to an inner surface of the tire to mount the functional component accommodation case. The fitting structure includes a plurality of case-side convex/concave parts that are formed on a case bottom surface, which is a surface on a tire inner surface side of the functional component accommodation case and that extend in mutually intersecting directions, and plural base-side convex/concave parts that are formed on a functional component accommodation case side of a base bottom part, which is an attachment part to be attached to the tire, of the rubber base and that fit with the case-side convex/concave parts.

In this way, plural case-side convex/concave parts extending in mutually interesting directions are provided on the bottom part of the functional component accommodation case, and base-side convex/concave parts fitting with the case-side convex/concave parts are provided on the functional component accommodation case side of the rubber base, so as to disperse, by the rubber base, vibration and rotation occurring in the functional component accommodation case at the time of step-in and at the time of kick-out. Therefore, even a depth or a height of the base-side concave/convex parts is small, it is possible to effectively suppress vibration, rotation and frictional heat generation of the functional component accommodation case.

Further, the number, length, width, shape and so on of the case-side convex/concave part are made to be asymmetrical with respect to a straight line that passes through a center of the case bottom face and that extends in a direction orthogonal to the tire circumferential direction. Accordingly, there is an advantage that, when the fitting direction of the functional component is determined, the fitting direction is not taken wrong at the time when the functional component accommodation case is fitted into the rubber base.

Further, as examples of the case where the fitting direction is determined, there are cases, for example, a case of mounting a sensor of which measurement direction has been determined such as a case of an acceleration sensor, and a case where the center of gravity of the functional component accommodation case is set to the kick-out side.

Further, according to the exemplary embodiment of the present invention, the case-side convex/concave parts include a first case-side convex/concave part formed along the straight line inclined at the predetermined angle, a second case-side convex/concave part extending in a direction interesting the first case-side convex/concave part and terminating at one end side of the first case-side convex/concave part, and a third case-side convex/concave part extending in the direction interesting the first case-side convex/concave part and terminating at other end side of the first case-side convex/concave part. The second case-side convex/concave part and the third case-side convex/concave part are formed to be asymmetrical with respect to a center line of the first case-side convex/concave part.

Whereby, the asymmetrical convex/concave parts can be easily formed, and, with a simple configuration, vibration, rotation and frictional heat generation of the functional component accommodation case can be efficiently suppressed.

At this time, if both of the second case-side convex/concave part and the third case-side convex/concave part are on a line intersecting to an extension direction of the first case-side convex/concave part and a width of the third case-side convex/concave part is made wider than a width of the second case-side convex/concave part, the formation of convex/concave parts is further facilitated.

Further, since a depth or a height of the case-side convex/concave part is larger at a center part side and smaller at a peripheral edge side of the functional component accommodation case so as to be able to support stresses at the time of step-in and at the time of kick-out, vibration and rotation of the functional component accommodation case can be further reduced.

Further, a side surface convex/concave part is formed on a side surface side of the functional component accommodation case and an upper surface convex/concave part is formed on a case upper surface which is a surface opposite to the base bottom part, and inner convex/concave parts, which fit with the side surface convex/concave part and the upper surface convex/concave part, are formed on an inner surface side of the base bottom so as to further enhance the holding power of the rubber base to hold the functional component accommodation case. Accordingly, vibration and rotation of the functional component accommodation case can be further reduced.

Further, a thickness of the base bottom part is made thicker at the center part side and thinner at the peripheral part side so as to reduce influence, of the concave at the center part of the rubber base, occurring at the time of attaching the rubber base to the tire inner surface. Accordingly, the holding power to hold the functional component accommodation case can be enhance and vibration and rotation of the functional component accommodation case can be further reduced.

### REFERENCE SIGN LIST

10 Functional component with rubber base, 20 Functional component accommodation case, 20a Upper surface, 20b Bottom surface, 20c Side surface, 21 Sensor module, 21a Acceleration sensor, 21b Power generation element, 21c Wireless device, 22 First groove, 23 Second groove, 24 Third groove, 25 Cross groove, 26 Side surface groove, 27 Upper surface groove, 30 Rubber base, 30 Opening part, 30b Accommodation concave part, 30M Positioning mark, 31 Base bottom part, 32 Side wall part, 33 Lid part, 34 First convex part, 35 Second convex part, 36 Third convex part, 37 Inner convex part, 38 Lid side convex part, 40 Tire, 41 Inner liner part, m Center line of first groove.

## Claims

1. A fitting structure comprising a functional component accommodation case and a rubber base, the functional component accommodation case being configured to accommodate a functional component that detects a state of a tire, and the rubber base being configured to be attached to an inner surface of the tire so as to mount the functional component accommodation case,
**characterised in that**:
the functional component accommodation case (20) includes a plurality of case-side convex/concave parts that are formed on a case bottom surface, which is a surface on a tire inner surface side of the functional component accommodation case and that extend in mutually intersecting directions, and
the rubber base (30) includes a plurality of base-side convex/concave parts that are formed on a functional component accommodation case side of a base bottom part, which is an attachment part of the rubber base to be attached to the tire, and that fit with the case-side convex/concave parts.

2. The fitting structure comprising a functional component accommodation case and a rubber base according to Claim 1, wherein the plurality of case-side convex/concave parts are formed to be asymmetrical with respect to a straight line that passes through a center of the case bottom and that inclines at a 90° angle with respect to a tire circumferential direction.

3. The fitting structure comprising a functional component accommodation case and a rubber base according to Claim 2, wherein, the plurality of case-side convex/concave parts include:
a first case-side convex/concave part formed along the straight line inclined at the 90° angle;
a second case-side convex/concave part that extends in a direction interesting the first case-side convex/concave part and terminates at one end side of the first case-side convex/concave part;
a third case-side convex/concave part that extends in the direction interesting the first case-side convex/concave part and terminates at other end side of the first case-side convex/concave part, and wherein
the second case-side convex/concave part and the third case-side convex/concave part are formed to be asymmetrical with respect to a center line of the first case-side convex/concave part.

4. The fitting structure comprising a functional component accommodation case and a rubber base according to Claim 3, wherein, both of the second case-side convex/concave part and the third case-side convex/concave part are on a line intersecting to an extension direction of the first case-side convex/concave part and a width of the third case-side convex/concave part is wider than a width of the second case-side convex/concave part.

5. The fitting structure comprising a functional component accommodation case and a rubber base according to any of Claims 1 to 4, wherein, a depth or a height of the case-side convex/concave part is larger at a center part side of the functional component accommodation case and smaller at a peripheral edge side of the functional component accommodation case.

6. The fitting structure comprising a functional component accommodation case and a rubber base according to any of Claims 1 to 5, wherein, a side surface convex/concave part is formed on a side surface side of the functional component accommodation case, an upper surface convex/concave part is formed on a case upper surface which is a surface opposite to the base bottom, and inner convex/concave parts are formed on an inner surface side of the base bottom, the inner convex/concave parts fitting with the side surface convex/concave part and the upper surface convex/concave part.

7. The fitting structure comprising a functional component accommodation case and a rubber base according to any of Claims 1 to 6, wherein, a thickness of the base bottom is made thicker at the center part side and thinner at the peripheral edge side.

## Patentansprüche

1. Montagestruktur, die ein Funktionskomponente-Aufnahmegehäuse und eine Gummibasis umfasst, wobei das Funktionskomponente-Aufnahmegehäuse dafür konfiguriert ist, eine Funktionskomponente aufzunehmen, die einen Zustand eines Reifens erfasst, und die Gummibasis dafür konfiguriert ist, an einer Innenfläche des Reifens befestigt zu werden, um so das Funktionskomponente-Aufnahmegehäuse zu montieren,
**dadurch gekennzeichnet, dass**:
das Funktionskomponente-Aufnahmegehäuse (20) eine Vielzahl von gehäuseseitigen konvexen/konkaven Teilen umfasst, die auf einer Gehäuse-Bodenfläche geformt sind, die eine Fläche auf einer Reifen-Innenflächenseite des Funktionskomponente-Aufnahmegehäuses ist, und die sich in einander wechselseitig schneidenden Richtungen erstrecken, und
die Gummibasis (30) eine Vielzahl von basisseitigen konvexen/konkaven Teilen umfasst, die auf einer Funktionskomponente-Aufnahmegehäuseseite eines Basis-Bodenteils geformt sind, der ein Befestigungsteil der Gummibasis ist, der an dem Reifen zu befestigen ist, und die mit den gehäuseseitigen konvexen/konkaven Teilen zusammenpassen.

2. Montagestruktur, die ein Funktionskomponente-Aufnahmegehäuse und eine Gummibasis umfasst, nach Anspruch 1, wobei die Vielzahl von gehäuseseitigen konvexen/konkaven Teilen so geformt ist, dass sie asymmetrisch in Bezug auf eine gerade Linie sind, die durch eine Mitte des Gehäusebodens hindurchgeht und die sich in einem Winkel von 90° in Bezug auf eine Reifenumfangsrichtung neigt.

3. Montagestruktur, die ein Funktionskomponente-Aufnahmegehäuse und eine Gummibasis umfasst, nach Anspruch 2, wobei die Vielzahl von gehäuseseitigen konvexen/konkaven Teilen Folgendes einschließt:
einen ersten gehäuseseitigen konvexen/konkaven Teil, der entlang der geraden Linie geformt ist, die in dem 90°-Winkel geneigt ist,
einen zweiten gehäuseseitigen konvexen/konkaven Teil, der sich in einer Richtung, die den ersten gehäuseseitigen konvexen/konkaven Teil schneidet, erstreckt und an einer Endseite des ersten gehäuseseitigen konvexen/konkaven Teils endet,
einen dritten gehäuseseitigen konvexen/konkaven Teil, der sich in der Richtung, die den ersten gehäuseseitigen konvexen/konkaven Teil schneidet, erstreckt und an einer anderen Endseite des ersten gehäuseseitigen konvexen/konkaven Teils endet, und wobei
der zweite gehäuseseitige konvexe/konkave Teil und der dritte gehäuseseitige konvexe/konkave Teil so geformt sind, dass sie in Bezug auf eine Mittellinie des ersten gehäuseseitigen konvexen/konkaven Teils symmetrisch sind.

4. Montagestruktur, die ein Funktionskomponente-Aufnahmegehäuse und eine Gummibasis umfasst, nach Anspruch 3, wobei sich sowohl der zweite gehäuseseitige konvexe/konkave Teil als auch der dritte gehäuseseitige konvexe/konkave Teil auf einer Linie befinden, die eine Ausdehnungslinie des ersten gehäuseseitigen konvexen/konkaven Teils schneidet, und eine Breite des dritten gehäuseseitigen konvexen/konkaven Teils breiter ist als eine Breite des zweiten gehäuseseitigen konvexen/konkaven Teils.

5. Montagestruktur, die ein Funktionskomponente-Aufnahmegehäuse und eine Gummibasis umfasst, nach einem der Ansprüche 1 bis 4, wobei eine Tiefe oder Höhe des gehäuseseitigen konvexen/konkaven Teils an einer Mittelteilseite des Funktionskomponente-Aufnahmegehäuses größer und an einer Umfangskantenseite des Funktionskomponente-Aufnahmegehäuses kleiner ist.

6. Montagestruktur, die ein Funktionskomponente-Aufnahmegehäuse und eine Gummibasis umfasst, nach einem der Ansprüche 1 bis 5, wobei ein konvexer/konkaver Seitenflächenteil auf einer Seitenflächenseite des Funktionskomponente-Aufnahmegehäuses geformt ist, ein konvexer/konkaver Oberseitenteil auf einer GehäuseOberseite, die eine Fläche, entgegengesetzt zu dem Basisboden, ist, geformt ist und innere konvexe/konkave Teile auf einer Innenflächenseite des Basisbodens geformt sind, wobei die inneren konvexen/konkaven Teile mit dem konvexen/konkaven Seitenflächenteil und dem konvexen/konkaven Oberseitenteil zusammenpassen.

7. Montagestruktur, die ein Funktionskomponente-Aufnahmegehäuse und eine Gummibasis umfasst, nach einem der Ansprüche 1 bis 6, wobei eine Dicke des Basisbodens an der Mittelteilseite dicker und an der Umfangskantenseite dünner gestaltet ist.

## Revendications

1. Structure de montage, comprenant un boîtier de réception d'un composant fonctionnel et une base en caoutchouc, le boîtier de réception du composant fonctionnel étant configuré pour recevoir un composant fonctionnel qui détecte un état d'un bandage pneumatique, et la base en caoutchouc étant configurée pour être fixée sur une surface interne du bandage pneumatique, de sorte à assurer le montage du boîtier de réception du composant fonctionnel ;
**caractérisée en ce que** :
le boîtier de réception du composant fonctionnel (20) inclut une pluralité de parties convexes/concaves du côté du boîtier qui sont formées sur une surface du fond du boîtier, constituée par une surface sur le côté de la surface interne du bandage pneumatique du boîtier de réception du composant fonctionnel et qui s'étendent dans des directions à intersection mutuelle ; et
la base en caoutchouc (30) inclut une pluralité de parties convexes/concaves du côté de la base, qui sont formées sur un côté du boîtier de réception du composant fonctionnel d'une partie du fond de la base, constituée par une partie de fixation de la base en caoutchouc devant être fixée sur le bandage pneumatique, et adaptées aux parties convexes/concaves du côté du boîtier.

2. Structure de montage comprenant un boîtier de réception d'un composant fonctionnel et une base en caoutchouc selon la revendication 1, dans laquelle la pluralité de parties convexes/concaves du côté du boîtier sont formées de sorte à être asymétriques par rapport à une ligne droite passant à travers le centre du fond du boîtier et inclinée à un angle de 90° par rapport à une direction circonférentielle du bandage pneumatique.

3. Structure de montage comprenant un boîtier de réception d'un composant fonctionnel et une base en caoutchouc selon la revendication 2, dans laquelle la pluralité de parties convexes/concaves du côté du boîtier incluent :
une première partie convexe/concave du côté du boîtier formée le long de la ligne droite inclinée à un angle de 90° ;
une deuxième partie convexe/concave du côté du boîtier qui s'étend dans une direction coupant la première partie convexe/concave du côté du boîtier et qui se termine au niveau d'un côté d'extrémité de la première partie convexe/concave du côté du boîtier ;
une troisième partie convexe/concave du côté du boîtier qui s'étend dans la direction coupant la première partie convexe/concave du côté du boîtier et se termine au niveau de l'autre côté d'extrémité de la première partie convexe/concave du côté du boîtier ; et dans laquelle :
la deuxième partie convexe/concave du côté du boîtier et la troisième partie convexe/concave du côté du boîtier sont formées de sorte à être asymétriques par rapport à une ligne médiane de la première partie convexe/concave du côté du boitier.

4. Structure de montage comprenant un boîtier de réception d'un composant fonctionnel et une base en caoutchouc selon la revendication 3, dans laquelle la deuxième partie convexe/concave du côté du boîtier et la troisième partie convexe/concave du côté du boîtier se situent sur une ligne coupant une direction d'extension de la première partie convexe/concave du côté du boîtier, et une largeur de la troisième partie convexe/concave du côté du boîtier est supérieure à une largeur de la deuxième partie convexe/concave du côté du boîtier.

5. Structure de montage comprenant un boîtier de réception d'un composant fonctionnel et une base en caoutchouc selon l'une quelconque des revendications 1 à 4, dans laquelle une profondeur ou une hauteur de la partie convexe/concave du côté du boîtier est accrue au niveau d'un côté de la partie centrale du boîtier de réception du composant fonctionne et réduite au niveau d'un côté de bord périphérique du boîtier de réception du composant fonctionnel.

6. Structure de montage comprenant un boîtier de réception d'un composant fonctionnel et une base en caoutchouc selon l'une quelconque des revendications 1 à 5, dans laquelle une partie convexe/concave de surface latérale est formée sur un côté de la surface latérale du boîtier de réception du composant fonctionnel, une partie convexe/concave de surface supérieure est formée sur une surface supérieure du boîtier , constituée par une surface opposée au fond de la base, et des parties convexes/concaves internes sont formées sur un côté de la surface interne du fond de la base, les parties convexes/concaves internes étant adaptées à la partie convexe/concave de la surface latérale et à la partie convexe/concave de la surface supérieure.

7. Structure de montage comprenant un boîtier de réception d'un composant fonctionnel et une base en caoutchouc selon l'une quelconque des revendications 1 à 6, dans laquelle une épaisseur du fond de la base est accrue au niveau du côté de la partie centrale et réduite au niveau du côté du bord périphérique.
